# EUROPEAN PATENT SPECIFICATION

(11) **EP 2 468 677 B1**
(45) Date of publication and mention of the grant of the patent: **19.03.2014**
(21) Application number: 11195426.9
(22) Date of filing: 22.12.2011
(51) Int. Cl.: B66F 9/07, B65G 1/04

(54) **Stacker crane**
Stapelkran
Grue empileuse

(30) Priority: 24.12.2010 JP 2010288592
(43) Date of publication of application: 27.06.2012
(73) Proprietor: Daifuku Co., Ltd., Osaka 555-0012 (JP)
(72) Inventor: Iwata, Masashige, Shiga, 529-1662 (JP)
(74) Representative: Copsey, Timothy Graham

(56) References cited:
- JP-A- 7 251 904
- JP-A- 2003 212 308
- JP-A- 2006 036 454
- JP-U- H0 243 898
- US-A1- 2004 228 709

## Description

### Background of the Invention

### 1) Field of the Invention

The present invention relates to a stacker crane, particularly a stacker crane including a lower frame having running wheels runnable along rails at both front and rear end portions of the frame, front and rear support rods standing from the front and rear end portions of the lower frame, an upper frame for connecting the top ends of the front and rear support rods to each other, and a platform being guided by the front and rear support rods.

### 2) Related Art

Such a stacker crane is generally used to store articles in storage racks having storages lengthwise and breadthwise for storing articles.

That is to say, the stacker crane travels along the front of the storage racks and the platform moves up and down, thereby an article transfer apparatus provided on the platform is moved to positions for transferring articles to the storage of the storage racks, an article loading portion and an article unloading portion for loading articles to be transferred at an article loading portion and for unloading articles stored in the storage at the article unloading portion.

A conventional stacker crane is disclosed in Japanese Patent Preliminarily Publication No. 2003-212308, where an upper frame is constituted as mentioned in the following.

The upper frame of the stacker crane comprises a pair of left and right frame portions; these frame portions are constituted of a pair of front and rear connecting plates, which are connected to the front and rear support rods, respectively, by means of bolts, and an elongated upper frame portion being extended in the front and rear direction of the crane and being connected to the pair of front and rear connecting plates at both ends thereof.

The pair of left and right frame portions are connected to the front and rear support rods, respectively, such that the rods are positioned between the left and right frame portions.

Each connecting plate is protruded in an upward direction more thatn the rods; and the protruded portion of the connecting plate has an engagement portion having a reversed C-shape viewed from the front and rear direction of the crane. While, the upper frame portion comprises a frame member having a reversed C-shaped cross section and is connected to the connecting plates by means of bolts in a condition in which the end portions of the upper frame portion in the front and rear direction of the crane are engaged to the engagement portions of the connecting plates, respectively.

That is to say, an engagement portion is formed with the connecting plate, to which the upper frame portion is connected by means of bolts in a condition that the upper frame portion is engaged into the engagement portion of the connecting plate, so that the up-and-down fluctuation of the upper frame portion against the connecting plate can be suitably controlled. Thereby the pair of front and rear support rods are appropriately connected to the upper and lower frames in a condition that the lower frame, the front and rear support rods, and the upper frame are assembled together forming a frame body having a rectangular shape viewed from side. That is, for instance, a deformation from the rectangular-shaped assembling condition caused by the fluctuation of the parallel-arranged front and rear support rods in the back and forth direction against the lower frame is suitably prevented.

According to the conventional stacker crane disclosed in Japanese Patent Preliminarily Publication No. 2003-212308, the upper frames of the left and right frame portions are connected to each other via the connecting plate, to which the upper frame portions are fit at many points in the back and forth direction of the crane, by means of bolts, so that the upper frame is constituted as a ladder-shaped frame which is hard to be deformed as a whole.

In the conventional stacker crane disclosed in Japanese Patent Preliminarily Publication No. 2003-212308, a pair of front and rear attachment plates for supporting front and rear guide rollers, respectively, which are being urged against the side surface of a guide rail provided on the ceiling side, are connected to the connecting plate by means of bolts in a condition that the attachment plates are mounted on the left and right connecting plates between which the front support rod is held or mounted on the left and right connecting plates between which the rear support rod is held.

The upper frame of the conventional stacker crane is constructed such that an engagement portion which engages the upper frame portion is formed in the pair of front and rear connecting plates, which are connected to the front and rear support rods by means of bolts, respectively, and the connecting plate and the upper frame portion are connected to each other by means of bolts in a condition that the upper frame portion is being engaged into the engagement portion. This, therefore, shows the tendency for the steps for the upper frame production become complex due to the facts that the shape of the connecting plates is complex, and that an improvement has been long awaited. the crane is restricted due to friction caused by the bolt connection therebetween, and therefore, the connecting strength between the connecting plate and the upper frame in the front and rear direction of the crane is insufficient. As a result, the connecting strength for connecting the front and rear support rods in the front and rear direction of the crane, such as the strength for restricting the movement of the front and rear support rods to the direction that the rods are spaced from each other, becomes insufficient. An improvement from this point of view has also been awaited.

In fact, the production of the upper frame of the conventional stacker crane tends to be cumbersome and the strength for connecting the front and rear support rods in the front and rear direction of the crane is apt to be insufficient, so that an improvement is awaited.

Incidentally, the upper frame of the conventional stacker crane is constituted such that the pair of front and rear attachment plate for supporting the front and rear guide rollers, which are being urged to the side surface of the guide rail on the ceiling side, are connected to the left and right connecting plates between which the front support rod is held or to the left and right connecting plates between which the rear support rod is held. Thus, a force acting on the guide rollers is caused when the guide rollers are guided by the guide rail; it acts on the connecting plates being connected to the support rods. Therefore, it is necessary to make the strength of the connecting plate and the strength for attaching the connecting plates to the support rods sufficiently high.

US2004/0228709 describes a stacker crane and includes a lower frame that runs along a running rail, an upper frame, a platform that transfers an article and a longitudinal pair of raising and lowering masts connected perpendicularly to the upper and lower frames to guide and support the platform so that the platform can freely ascend and descend. The upper frame is connected, via a plate and bolts, between an upper end of the raising and lowering masts.

### Summary of the Invention

The present invention has been carried out with the view to the above revelations, so the purpose of the invention is to provide a stacker crane in which the front and rear support rods can be appropriately connected to the upper frame, while making the manufacturing of the upper frame easy.

This purpose is achieved by the provision of a stacker crane according to all the technical features, in combination, of claim 1.

The stacker crane according to the present invention comprises a lower frame having running wheels runnable along rails at both front and rear end portions of the frame, front and rear support rods stood from the front and rear end portions of the lower frame, an upper frame for connecting the top ends of the front and rear support rods to each other, and a platform being guided by the front and rear support rods so as to be freely lifted up and down. In the stacker crane of the present invention:
the upper frame comprises a main part being constituted of a first plate elongated in a vertical direction, and a reinforcing part being constituted of a second plate elongated in a horizontal direction, wherein said main part comprises front and rear extensions being extended in the front and rear direction of the crane and mast connecting portions which are downwardly extended from both front and rear ends of said front and rear extensions, respectively, and wherein said second plate of the reinforcing part projects from the main part in a width direction of the crane and extends in the front and rear direction of said crane; and
said mast connecting portions of the main part are connected to front and rear support rods by means of bolts while being urged against the side surfaces of said front and rear support rods, respectively.

That is to say, the main part constituting the upper frame of the crane comprises a first plate elongated in a vertical direction comprising front and rear extensions and mast connecting portions; and the main part is formed as an integrated first plate elongated in a vertical direction. Therefore, it is possible to give sufficient tension strength to the upper frame so as to prevent the movement of the front and rear support rods in a direction of separating them from each other.

Furthermore, since the upper frame is provided with reinforcing part, which is constituted of a second plate elongated in a horizontal direction in a condition that it projects from the main part in a width direction of the crane and extends in the front and rear direction of the crane, a bending of the main part in the width direction of the crane is restricted by the reinforcing part although the main part is constituted of the (first) plate elongated in a vertical direction. Therefore, the strength for restricting the movement of the front and rear support rods in a direction of closing them to each other can also be given to the upper fame appropriately.

Moreover, since the main part is integrally constituted as a (first) plate elongated in a vertical direction such that it comprises mast connecting portions being extended downward from both ends of the front and rear extensions in front and rear direction of the crane, the strength of the main part is sufficiently great to prevent the benfinh of the front and rear extensions against the mast connecting portion in a vertical direction. Therefore, the pair of front and rear support rods can be appropriately connected to the upper frame in a condition that the lower frame, front and rear support rods, and the upper frame are assembled together so as to form a rectangular shaped frame, for instance, suitably preventing the deformation of the rectangular-shaped assembled position by parallel fluctuation of the front and rear support rods against the lower frame in the front and rear direction.

Then it is possible to provide sufficient strength to connect the front and rear support rods to the upper frame.

In addition, since the main part is integrally formed as a first plate elongated in a vertical direction, it can be manufactured easily; and the reinforcing part can be also easily formed to the main part by, for instance, welding a separately manufactured reinforcing part to the main part, or bending the upper end portions of the first plate elongated in a vertical direction of the main part to a horizontal direction to use them as the reinforcing part. Then the manufacturing of the upper frame can be manufactured easily.

In short, according to the present invention, a stacker crane is provided in which the front and rear support rod can be suitably connected to the upper frame, while making the manufacturing of the upper frame easy.

The first aspect of the present invention is that:
the upper frame comprises a pair of left and right frame portions comprised of the main part and the reinforcing part; and
the pair of left and right frame portions are connected to the front and rear support rods so as to position the rods between the frame portions.

That is to say, the upper frame comprises a pair of left and right frame portions, each of which is composed of the main part and reinforcing part, and these frame portions are connected to the front and rear support rods so as to position the front and rear support rods therebetween. Then, the front and rear support rods are connected to the pair of left and right frame portions, respectively, whereby the connection strength of the front and rear support rods to the upper frame can be made sufficiently high.

It should be noted that when connecting the front and rear support rods to the pair of left and right frame portions the upper frame may be formed as a ladder-shaped frame by providing a plurality of connecting frames for connecting the left and right frame portions in a condition where both ends of the connecting frames are connected to the left and right frame portions by means of bolts, respectively. However, since the main part is strengthened by the reinforcing parts, such a ladder-shaped connecting frame does not have to necessarily be provided.

In short, according to the second characteristic structure, in addition to the function and effect of the first characteristic structure, a stacker crane can be provided where the strength for connecting the front and rear support rods to the upper frame can be made sufficiently high.

In a second aspect, a preferred embodiment of the stacker crane according to the present invention, in addition to the above-mentioned first aspect, further comprises that:
the reinforcing parts of the pair of left and right frame portions project from the main parts in a width direction of the crane while being extended toward the other side frame portion, so that they are urged against the upper end of the front and rear support rods.

That is to say, when connecting the pair of left and right frame portions to the front and rear support rods, respectively, the position in a vertical direction of the left and right frame portions with respect to the front and rear support rods can be restricted by urging the reinforcing parts against the upper ends of the front and rear support rods.

Therefore, the left and right frame portions can be connected to the front and rear support rods in a condition that the vertical position of the left and right frame portions against the front and rear support rods has been determined to be an appropriate position.

In short, according to the second aspect of the present invention, in addition to the function and effect according to the first aspect, a stacker crane can be provided where the left and right frame portions can be connected to the front and rear support rods in a condition that the vertical position of the left and right frame portions against the front and rear support rods can be properly maintained.

In a third aspect, a preferred embodiment of the stacker crane according to the present invention, in addition to the second aspect further comprises that:
the reinforcing part comprises a downward bent portion extending downwardly from the end portions of the portion projecting in a width direction of the crane;
both end portions of the downward bent portions in a front and rear direction of the crane are formed so that they are positioned more inside than the end portions of the projected portion in the front and rear direction viewed from the front and rear direction of the crane; and
edge portions of the downward bent portion in the front and rear direction of the crane are urged against the outer circumference of said front and rear support rods in order to restrict the position of the pair of left and right frame portions in the back and forth direction of the crane with respect to the front and rear support rods.

That is to say, the edge portions at the downward bent portions in the front and rear direction of the body are urged against the outer circumferential surface of the front and rear support rods when connecting the pair of left and right frame portions to the front and rear support rods, the position of the left and right frame portions to the front and rear support rods in the front and rear direction of the crane can be limited.

Therefore, the left and right frame portions can be properly connected to the front and rear support rods, while keeping the position of the left and right frame portions in the front and rear direction of the crane to the front and rear support rods in a suitable manner.

In short, according to the third aspect of the present invention, in addition to the function and effect of the second aspect, a stacker crane can be provided where the left and right frame portions can be properly connected to the front and rear support rods, while keeping the position of the frame portions with respect to the front and rear support rods in the front and rear direction of the crane in a appropriated manner.

In a fourth aspect, a preferred embodiment of the stacker crane according to the present invention, in addition to the first to third aspects mentioned above, further comprises that:
the lower frame is comprised of front and rear wheel support frames for supporting running wheels and a connecting frame for connecting the front and rear wheel support frames;
a first mount is formed at the lower end portion of the front wheel support frame from amongst the front and rear wheel support frames for holding and mounting the lower end surface of the front support rod from amongst the front and rear support rods; and a second mount is formed at the lower end portion of the rear wheel support frame from amongst the front and rear wheel support frames for holding and mounting the lower end surface of the rear support rod from amongst the front and rear support rods;
the side surface of the front support rod is connected to and supported by the front wheel support frame, while the lower edge surface thereof is held by the first mount of the front wheel support frame; and
the side surface of the rear support rod is connected to and supported by the rear wheel support frame, while the lower edge surface thereof is held by the second mount of the rear wheel support frame.

That is to say, since the front support rod is mounted on the first mount of the front wheel support frame, the weight of the front support rod acts on the front wheel support frame; and in the same manner since the rear support rod is mounted on the second mount of the rear wheel support frame, the weight of the rear support rod acts on the rear wheel support frame.

Since the weight of the front support rod acts on the front wheel support frame and the weight of the rear support rod on the rear wheel support frame in this manner, it is harder for the front support rod or the rear support rod is less inclined in the front or rear direction, and thus it is possible to make the weight of the front frame light by reducing the strength of the upper frame.

That is to say, if the front support rod or the rear support rod is held and supported by the connecting frame for connecting the front wheel support frame and the rear wheel support frame, the connecting frame would be bent in a downward concave at its middle portion by the weight of the front or rear support rod, and then the front or rear support rod would be liable to be inclined so as to be close to each other at the upper portion thereof. Therefore, it would be necessary to give a certainlevel of strength to the upper frame in order to prevent the inclination.

In contrast, when the weight of the front support rod acts on the front wheel support frame and the weight of the rear support rod acts on the rear wheel support frame, the front support rod and the rear support rod are less inclined in a manner in which the upper portion of the rods become close to each other. Thus, it is possible to trim the weight of the upper frame by decreasing the strength to be given to the upper frame.

In short, according to the fourth aspect of the present invention, in addition to the first to third aspects mentioned above, it is possible to provide a stacker crane where the weight of the upper frame can be trimmed and the construction thereof can be made simple by reducing the strength to be given to the upper frame.

In a fifth aspect, a preferred embodiment of the present invention, in addition to the first to fourth aspects mentioned above, further comprises:
front and rear guide rollers which are urged against the side surface of guide rail on the ceiling side are provided on the front and rear support rods.

That is to say, the force generated on the guide rollers does not act on the upper frame but on the front and rear support rods by the fact that the guide rollers are guided by the guide rail on the ceiling side. In this way, the strength to be given to the upper frame can be reduced further and then the weight of the upper frame can be further trimmed.

In other words, in a case in which the guide rollers are provided on the upper frame, it is necessary to increase the strength of the upper frame because the force generated on the guide rollers also acts on the upper frame. However, according to the invention, as the guide rollers are provided on the front and rear support rods, the strength to be given to the upper frame can be reduced more.

In short, according to the fifth aspect of the present invention, in addition to the function and effect of the first to fourth aspects, a stacker crane can be provided where the upper frame is further lightened.

### Brief Description of the Drawings

Fig. 1 is a front view of an automated storage system.
Fig. 2 is a schematic plan view of the automated storage system in Fig. 1.
Fig. 3 is a side view of a stacker crane.
Fig. 4 is a lateral plan view of the stacker crane.
Fig. 5 is a perspective view showing a lower frame.
Fig. 6 is another perspective view illustrating the lower frame.
Fig. 7 is still another perspective view depicting the lower frame.
Fig. 8 is an exploded perspective view representing the lower frame.
Fig. 9 is a perspective view representing an attachment for the front support rod in the lower frame.
Fig. 10 is a perspective view showing an attachment for the rear support rod in the lower frame.
Fig. 11 is a side view of the lower frame, which is partially omitted.
Fig. 12 is a partially exploded perspective view showing the attachment of an idling wheel.
Fig. 13 is a perspective view illustrating the upper frame.
Fig. 14 is an exploded perspective view of the upper frame.
Fig. 15 is a vertical cross view depicting the upper frame.
Fig. 16 is a perspective view showing the structure of the platform to be guided.
Fig. 17 is a plan view of the attachment of a third guide, which is partially omitted.
Fig. 18 is a back view of the attachment of a third guide, which is partially omitted.
Fig. 19 is a side view of the third guide.
Fig. 20 is a back view showing an attachment for a running off stopper, which is partially omitted.

### Detailed Explanation of the Preferred Embodiments

The preferred embodiments of the present invention will be explained, referring to the drawings.

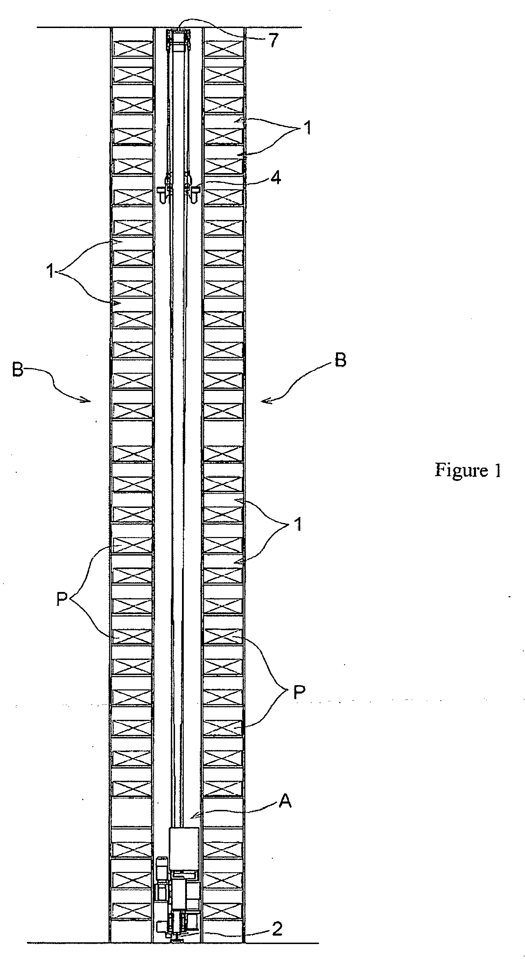

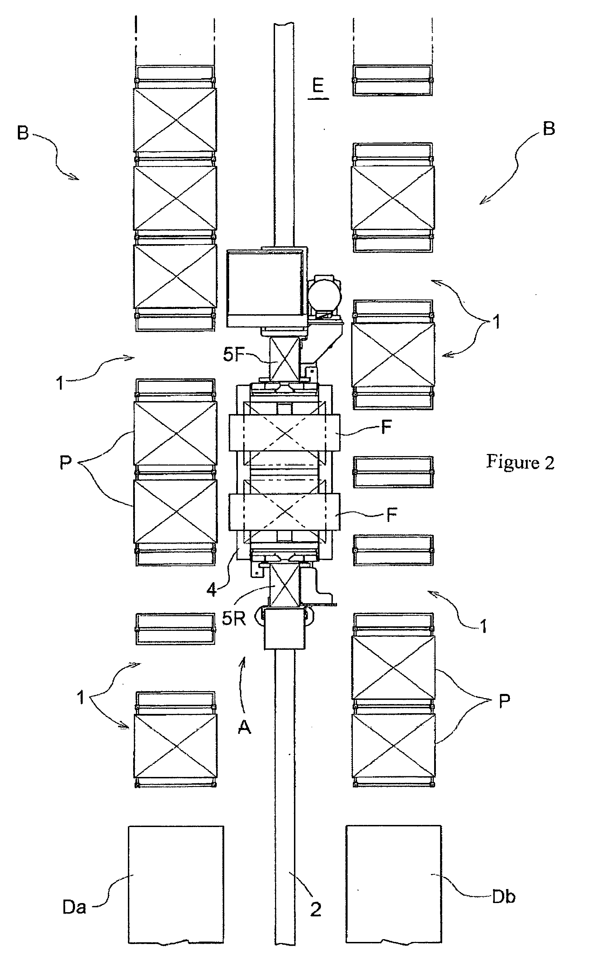

Figs. 1 and 2 are front and top views of an automated storage to which the stacker crane according to the present invention is applied. As shown in Figs. 1 and 2, the automated storage comprises a pair of article storage racks B, which include a plurality of storage spaces 1 for storing articles P, such as bucket-like containers, side by side; a stacker crane A, which travels through working passage E between the pair of storage racks B; an article loading part Da for bringing in articles P to be stored in the storage racks B from the outside and an article unloading part Db for taking out articles P stored in the storage racks B to the outside, which are set at both sides of the pair of storage racks B, respectively. The stacker crane A operates to pick up articles P stored in the storage spaces 1 and bring them to the article unloading part Db and to take out articles P, which have been loaded to the article loading part Da and store them into the storage spaces 1.

The article loading part Da and the article unloading part Db consist of conveyors for mounting and transferring articles P. No example is shown there, but at the article transferring place between the article loading and unloading parts Da and Db and the stacker crane A, an article lift for elevating articles, which is configured such that a space is formed for inserting a fork device F is provided, which will be explained later, for transferring articles under articles P.

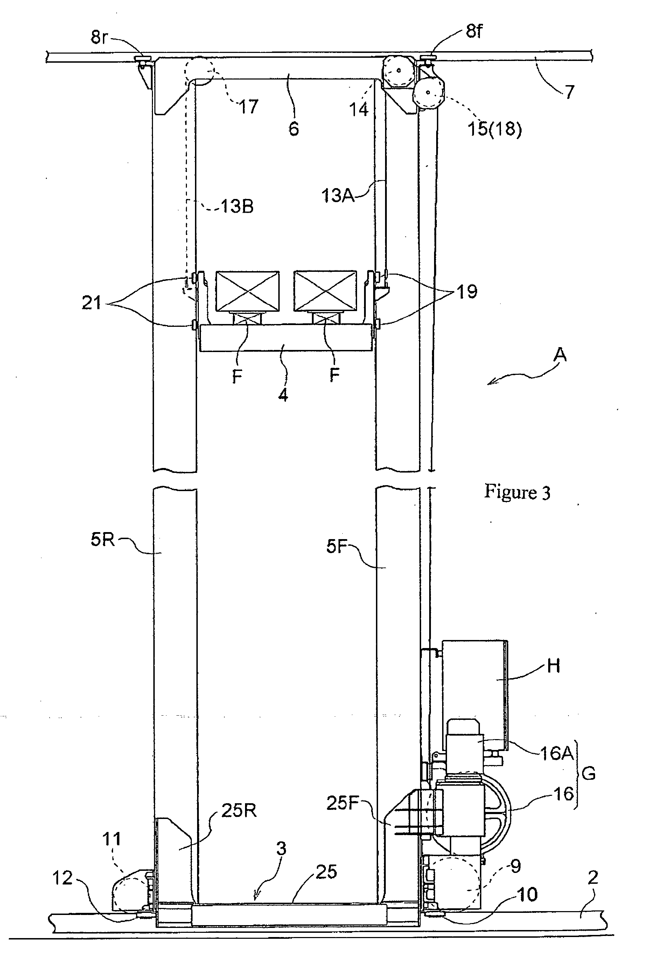

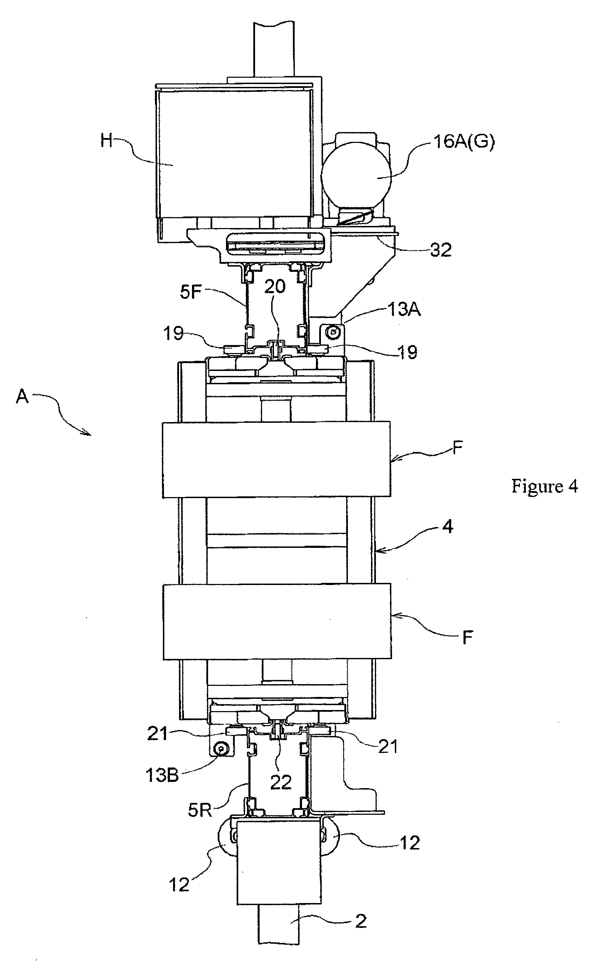

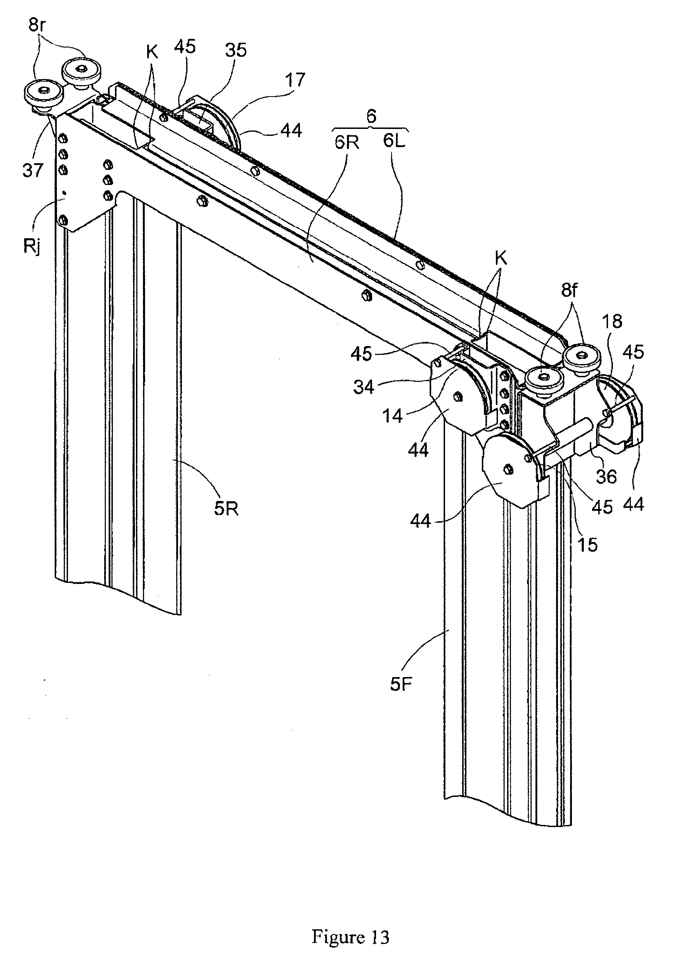

As shown in Figs. 3 and 4, the stacker crane A comprises a lower frame 3, which travels along a single travelling rail 2 provided on the floor along the working passage E; a pair of front and rear support rods 5F and 5R, which stand from the front and rear ends of the lower frame 3 in the traveling direction thereof to guide a platform 4 being movable up and down; and an upper frame 6 for connecting the upper ends of the support rods 5F and 5R to each other. In the automated storage, a guide rail 7 is also provided beneath the ceiling side of the working passage E. On the top ends of the pair of front and rear support rods 5F and 5R are provided, a pair of left and right guide rollers 8f and 8r, respectively (see Fig. 13), being urged against the side surfaces of the guide rail 7, respectively.

Therefore, the stacker crane A travels through the working passage E, while being guided by the travelling rail 2 and the guide rail 7 so as to carry out the loading and/or unloading operation of articles P mentioned above.

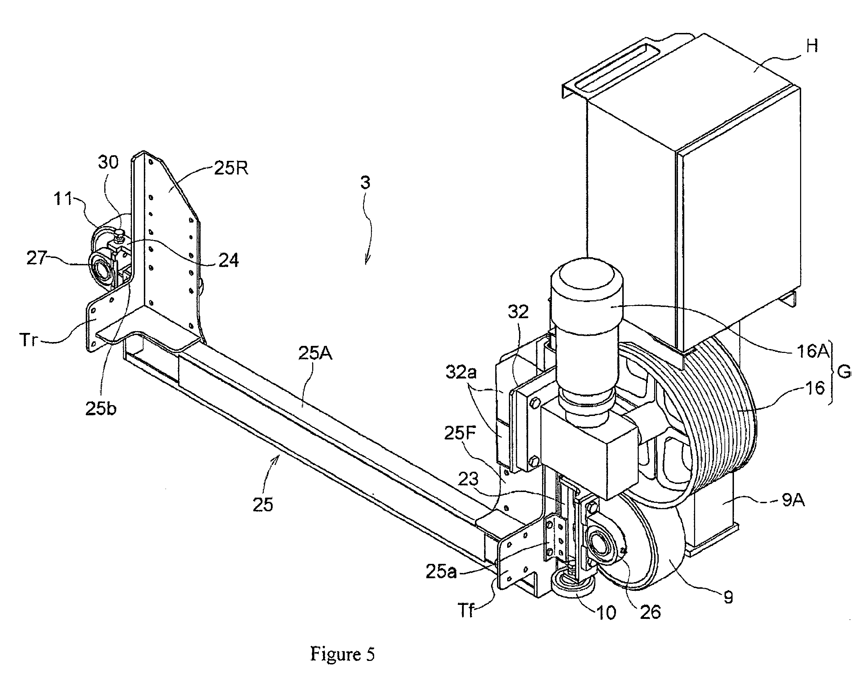

As also mentioned in Figs. 5 to 8, the lower frame 3 comprises: a driving wheel 9 as a running wheel mounted on the upper surface of the travelling rail 2, and a pair of left and right guiding wheels 10 being urged against the side surface of the travelling rail 2 on one of the sides of the frame in the back and front direction; while on the other sides of the frame in the back and front direction, an idling wheel 11 as a running wheel mounted on the upper surface of the travelling rail 2, and a pair of left and right guiding wheels 12, which are also urged against the side surface of the travelling rail 2 are provided; so that the lower frame 3 travels along the travelling rail 2.

It should be noted that the explanation that will be made with an assumption that the side on which the driving wheel 9 is positioned is the front side of the stacker crane A and the side on which the idling wheel 11 is positioned is the back side of the stacker crane A.

Thus, concerning the pair of front and rear support rods 5F and 5R, the front support rod 5F is on the driving wheel 9 side and the rear support rod 5R is on the idling wheel 11 side.

It should be noted that the front and rear direction of the stacker crane A will be described as a body front and rear direction and the width direction of the stacker crane A as a body width direction.

As represented in Figs. 3, 4 and 16, the platform 4 is suspended and supported by lifting wires 13A and 13B, which are connected to both the front and rear end portions of the platform 4 as lifting codes, two fork devices F are provided on the platform 4 side to side in the front and rear direction of the body.

The distance between the two fork devices F is the same as that between the storage spaces 1 in the article storage rack B, which are provided in a stack width direction, i.e. the front and rear direction of the body, as represented in Fig. 2, so that the two fork devices F can work the delivery of articles for two storage spaces 1 arranged in the stack width direction at the same time.

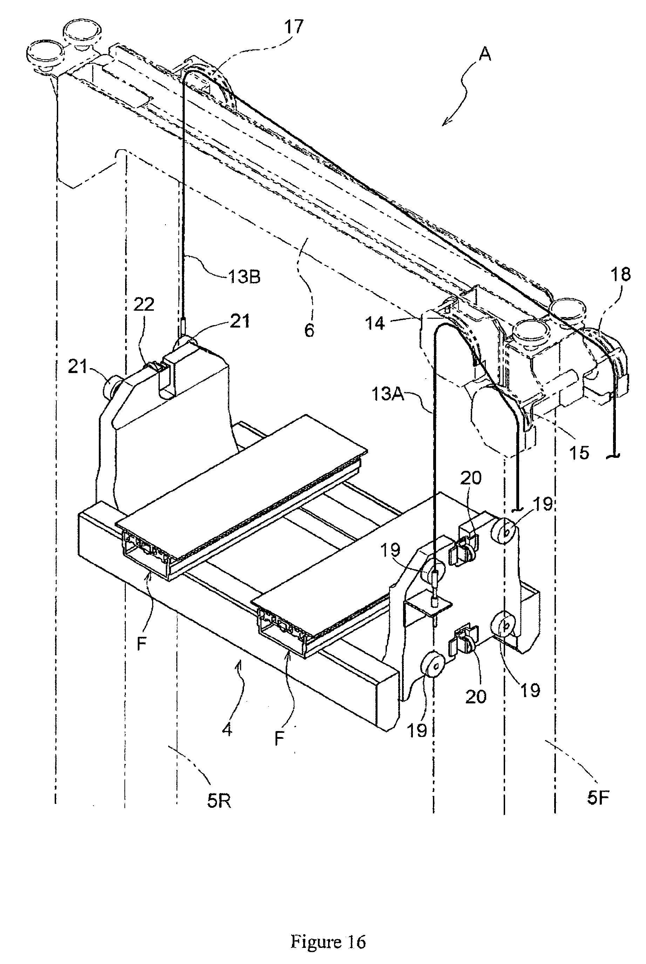

As represented in Figs. 3 and 16, out of the pair of lifting wires 13A and 13B for suspending and supporting the platform 4, the lifting wire 13A being connected to the front side of the platform 4 is extended in an upward direction from the platform 4 to a first guide 14 provided at the front side of the upper frame 6, then to a second guide 15 provided at the upper end of the front support rod 5F. At the first guide 14 and the second guide 15, the wire 13A is guided in the downward direction, changed to the lower direction and then further extended to a reel drum 16 (see Fig. 5), which is provided at the lower end of the front support rod 5F, where the wire 13 A is reeled.

Then, out of the pair of lifting wires 13A and 13B for suspending and supporting the platform 4, the lifting wire 13B being connected to the rear side of the platform 4 is extended in the upward direction from the platform 4 first to the third guide 17, which is provided at the rear side of the upper frame 6. At the third guide 17, the wire 13B is guided to the front side of the upper frame 6, then into the downward direction via a fourth guide 18 at the upper portion of the front support rod 5F, and then reeled in on the reel drum 16.

The reel drum 16 is driven to be reversely rotated with the aid of electric motor 16A, so that the platform 4 moves up and down by reeling and unreeling the lifting wires 13A and 13B to and from the drum 16.

As shown in Figs. 3, 4 and 16, wheels 19 for restricting the lateral position of the platform being urged against both the side surfaces of the front support rod 5F are provided at the front end of the platform 4, and wheels 20 for restricting the front and rear position of the platform being urged against the rear surface of the front support rod 5F are provided on the front end of the platform 4.

Further, wheels 21 for restricting the lateral position of the platform being urged against both the side surfaces of the rear support rod 5R are arranged at the rear end of the platform 4 and wheels 22 for restricting the front and rear position of the platform being urged against the front surface of the rear support rod 5R are provided on the rear side end of the platform 4.

Therefore, the platform 4 is lifted up and down along the front and rear support rods 5F and 5R being guided by the front and rear support rods 5F and 5R, while the position of the platform 4 being restricted in the vertical direction of the body and in the front and rear direction of the body.

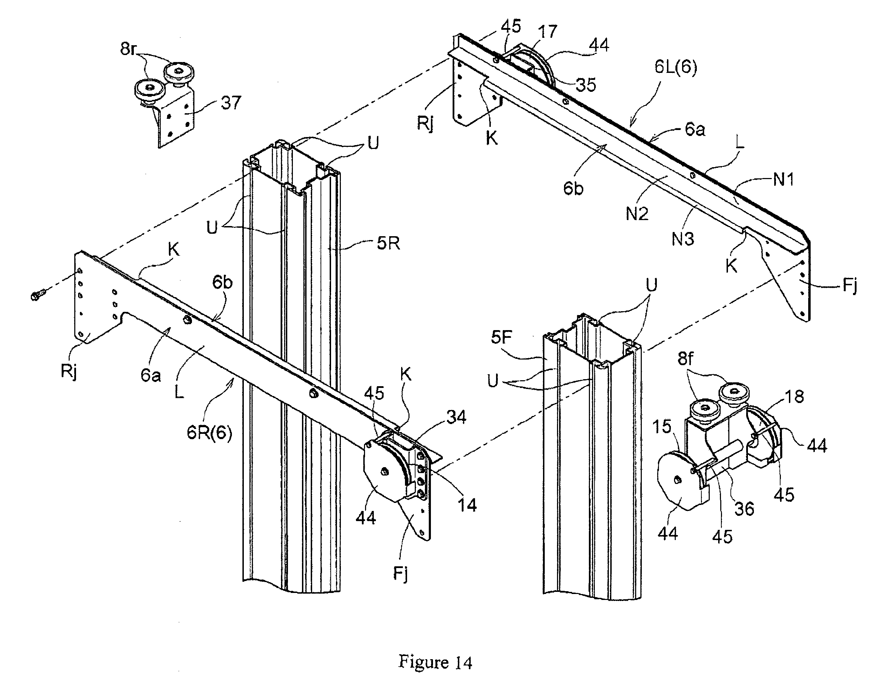

As shown in Figs. 4 and 14, the front and rear support rods 5F and 5R are formed as in a rectangular axial shape, i.e. in a rectangular tube shape. Concave grooves U are formed within the side surfaces of the rods, which are constructed such that the penetralia is wider than the entrance, along the longitudinal direction of the support rods. Other members are connected to the support rods by means of the concave grooves U as explained below.

That is to say, connecting plates (tap plates) with screw holes are inserted in the concave grooves U, and the support rods 5F and 5R and other members are connected together by means of bolts which are threadable to the connecting plates.

As shown in Figs. 5 to 8, the lower frame 3 comprises a driving wheel support frame 23 for supporting a driving wheel 9 and a driving wheel motor 9A for reversely driving the driving wheel 9, an idling wheel support frame 24 for supporting the idling wheel 11, and a connecting frame 25 being installed across the driving wheel support frame 23 and the idling wheel support frame 24.

The guide wheels 10 are supported in the driving wheel support frame 23 and the guide wheels 12 are supported in the idling wheel supporting from 24.

It should be noted that in the present embodiment the driving wheel support frame 23 and the idling wheel support frame 24 correspond to the front wheel support frame and the rear wheel support frame, respectively.

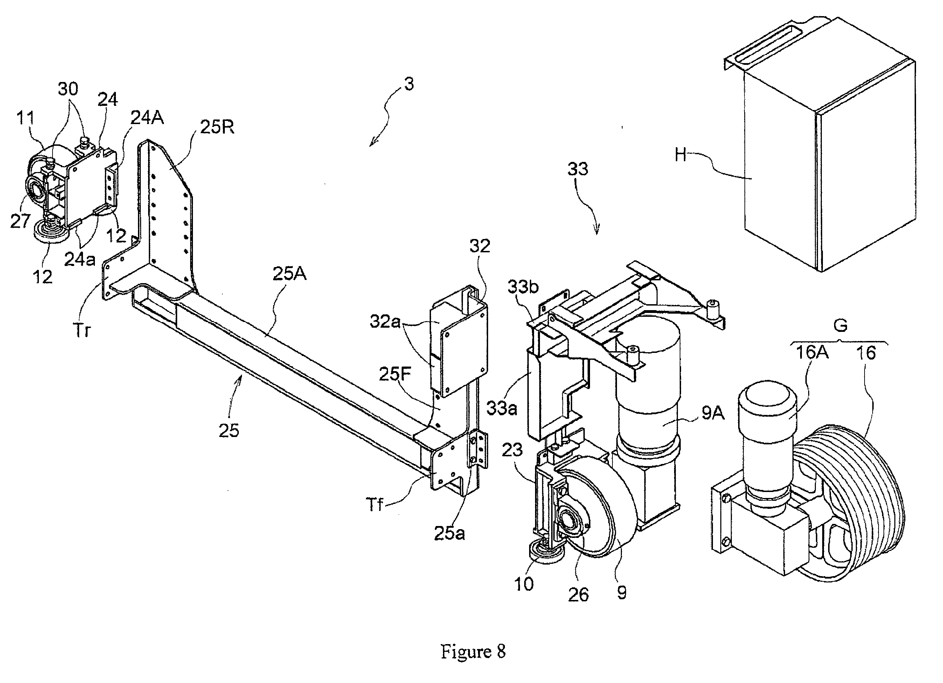

As illustrated in Fig. 8, the driving wheel support frame 23 has an inverted C-shape viewed from the top; on the pair of left and right end surfaces on the front side of the frame, is fixed a pair of left and right bearing units 26 with the aid of bolts for rotatably supporting the driving wheel 9.

The driving wheel 9 is installed in the left and right frame portions of the driving wheel support frame 23 in such a manner that the rear side portion of the wheel body is set in the frame portions.

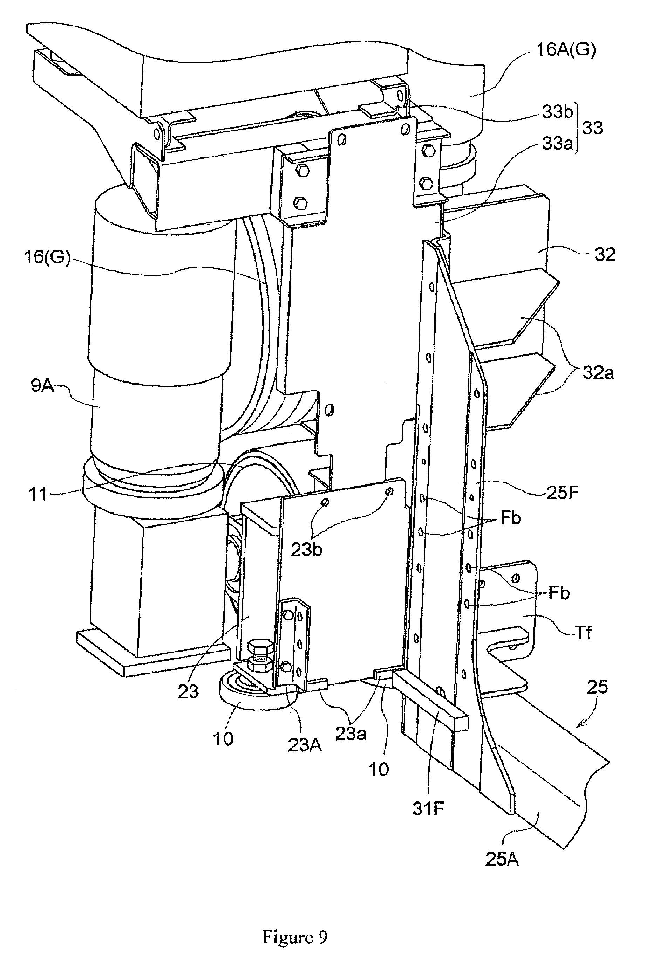

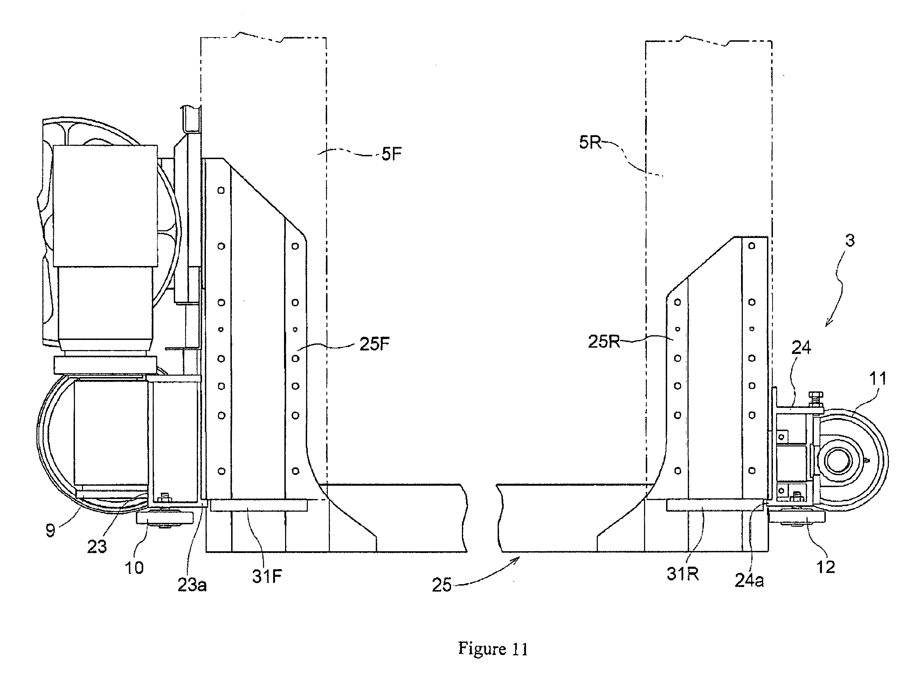

As depicted in Figs. 9 and 11, a flange 23a for mounting the lower end of the front support rod 5F is formed at the lower end of the rear side surface of the driving wheel support frame 23; and the front support rod 5F mounted on the flange 23a is connected to the driving wheel support frame 23 by means of bolts being inserted into bolt holes 23b formed within the upper end of the driving wheel support frame 23.

When connecting the front support rod 5F to the driving wheel support frame 23 by means of bolts, the above-explained connecting plate (tap plate) is inserted into the concave groove U of the front support rod 5F, then the bolts inserted into the holes 23b are threaded to the connecting plate (tap plate).

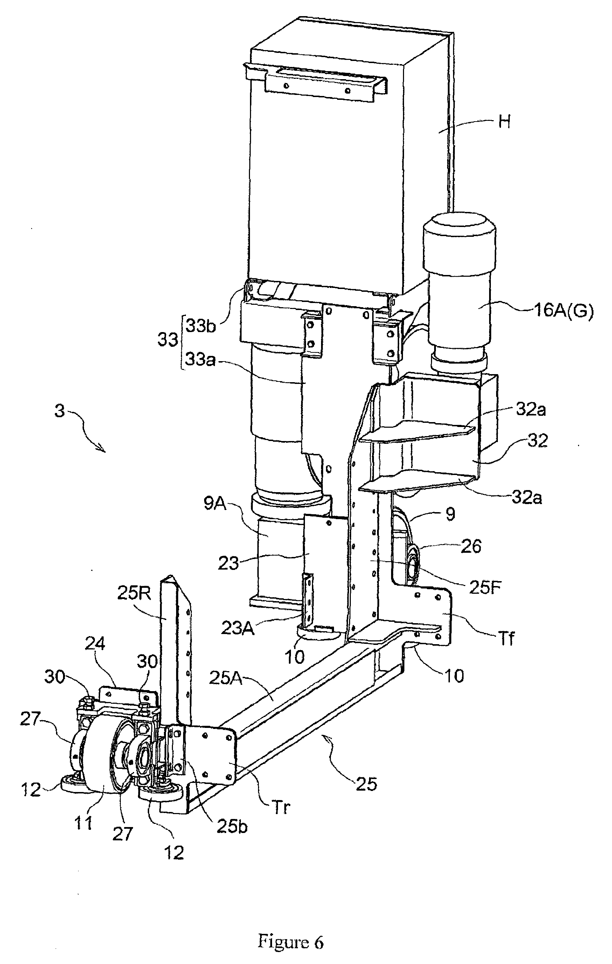

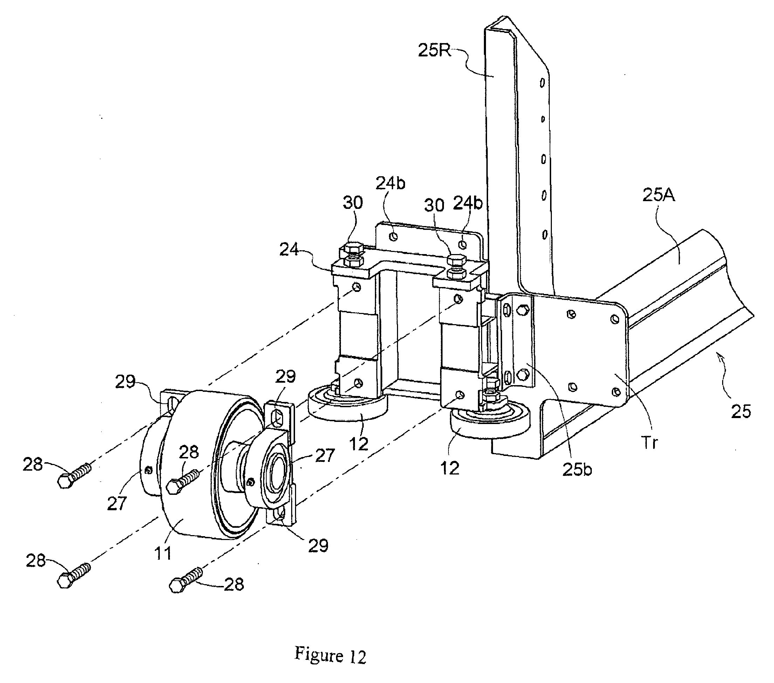

As shown in Figs. 6 and 12, the idling wheel support frame 24 has a reverse C-shape viewed from the top; and a pair of left and right bearing unites 27 for rotatably supporting the idling wheel 11 are fixed to a pair of left and right end surfaces of the rear side of the frame 24 by means of bolts.

It should be noted that the idling wheel 11 is rigged to the idling wheel support frame 24 in such a manner that the front side portion of the idling wheel 11 body is set between the left and right frame portions of the idling wheel support frame 24.

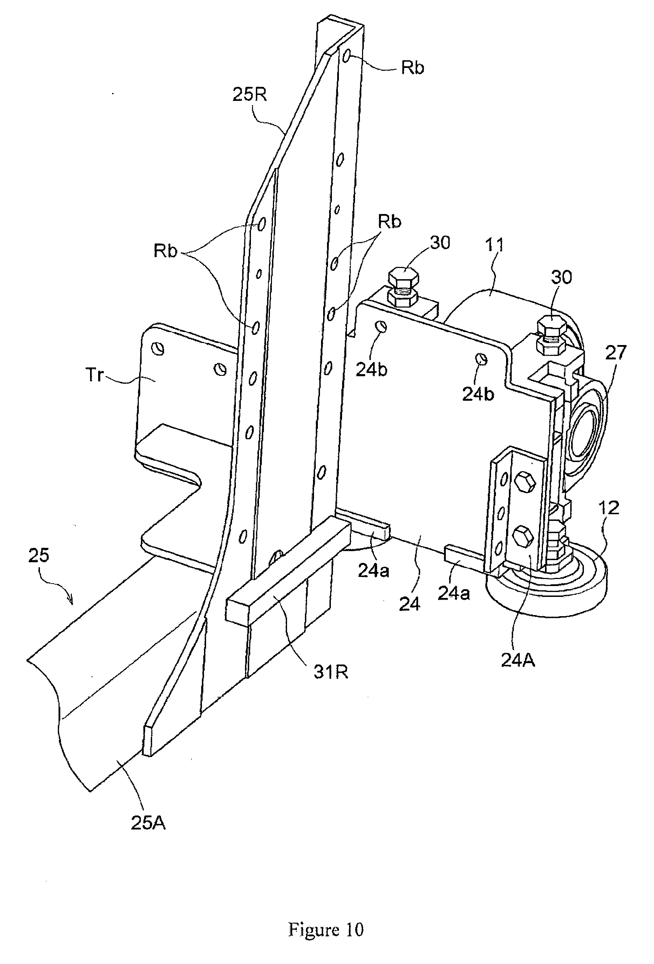

As illustrated in Fig. 10 and 11, a flange 24a for mounting the lower end of the rear support rod 5R is formed at the lower end surface of the front side surface of the idling wheel support frame 24; and the rear support rod 5R mounted on the flange 24a is connected to the idling wheel support frame 24 by means of bolts being inserted into bolt holes 24b formed at the upper end of the idling wheel support frame 24.

The bolt connection between the idling wheel support frame 24 and the rear support rod 5R is carried out in the same manner as that in the bolt connection between the driving wheel support frame 23 and the front support rod 5F.

As shown in Fig. 12, the holes 29 within the idling wheel support frame 24, through which bolts 28 are inserted to fix the pair of left and right bearing units 27 of the idling wheel 11 to the idling wheel support frame 24, respectively, are formed as vertically elongated holes, while position limiting bolts 30 by which the vertical movement of the bearing unit 27 of the idling wheel 11 is restricted against the idling wheel support frame 24, are threaded to the idling wheel support frame 24.

Therefore, by adjusting the forward or reverse rotation of the position limiting bolts 30, the vertical position of the bearing unit 27 of the idling wheel 11 with respect to the idling wheel support frame 24 can be adjusted. In accordance with this adjustment, the inclination in the body front and rear direction of the front and rear support rod 5F, 5R, i.e. the inclination of the stacker crane A, can be controlled.

The connecting frame 25 constituting the lower frame 3 is, as shown in Figs. 5 to 8, provided on one of the sides in the body width direction, i.e. on the right side, of the driving wheel support frame 23 and the idling wheel support frame 24.

The connecting frame 25 comprises an attach portion 25a to the side surface of the driving wheel support frame 23 (see Fig. 5) and an attach portion 25b to the side surface of the idling wheel support frame 24 at the front and rear end portions of the main frame portion 25A extending in the front and rear directions, respectively (see Fig. 6).

That is to say, the sub frame portion 25F and 25R having an L-shape section viewed from the top are welded to each of the front-rear edges of the main frame portion 25A so as that they stand from the main frame portion 25A into an upper direction; and to the sub frame portion 25F and 25R, flaps being bent to an L-shape constituting the attach portions 25a, 25b are welded to the sub frame portions 25F and 25R, respectively.

The main frame portion 25A is constituted with the aid of die steel having a C-shaped cross section, inside of which an electric cable, etc. can be housed. In the embodiment shown in the drawings, a cover is mounted to close the opening at the side of the main frame portion 25A.

Tool attachments Tf and Tr for attaching tools for supporting the lower frame 3 in an suspended manner are integrated to the front sub frame portion 25F and the rear sub frame portion 25R.

That is to say, the stacker crane A is transferred from the manufacturing site to the installation site in an exploded condition of lower frame 3, front and rear support rods 5F, 5R, upper frame 6, and platform 4; then assembled at the installation site. Thus, the lower frame is constructed such that the tools for supporting the lower frame 3 in a suspended manner from the floor surface can be mounted to the lower frame 3.

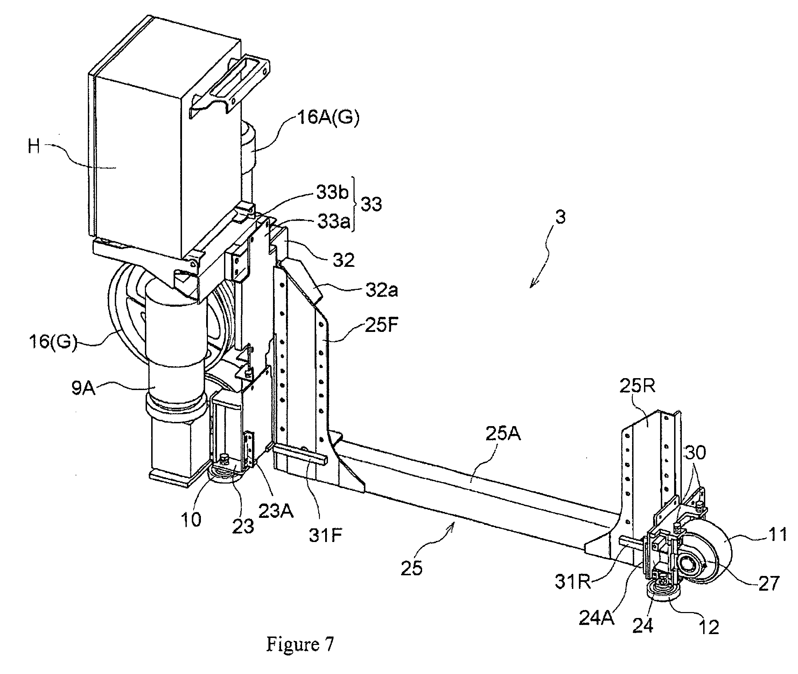

As shown in Figs. 7 and 9, at the lower end portion of the front sub frame 25F and located more to the inner side of at the crane body than the main frame 25A, a mount 31F for mounting the right side portion of the lower end surface of the front support rod 5F is provided. The mount 31F is formed by attaching a rectangular axial shaped member for forming the mount to the front sub frame 25F by welding. It should be noted that the mount holds the right side portion of the lower end surface of the front support rod 5F, which is different from the front side portion held by the flange 23 a of the front driving wheel support frame 23.

Further, as shown in Fig. 7 and 10, at the lower end portion of the rear sub frame 25R and located more to the inner side of at the crane body than the main frame 25A, a mount 31R for mounting the right side portion of the lower end surface of the rear supporting 5R is provided. The mount 31R is also formed by attaching a rectangular axial shaped member for forming the mount to the rear sub-frame 25R by welding. It should be noted that the mount holds the right side portion of the lower end surface of the front support rod 5R, which is different from the front side portion held by the flange 24a of the front wheel support frame 24.

As mentioned in Fig. 9, the bolt insert holes Fb are formed within the portion of the front sub frame 25F, which is positioned more to the inside of the crane than the main frame portion 25A; this portion is connected to the side surface at the crane body inner side surface out of the side surfaces of the front support rod 5F by means of bolts.

That is to say, in this embodiment, the front sub frame portion 25F is connected to the right surface portion, which is different from the front surface portion being connected and supported by the front side wheel support frame 23 out of the side surfaces of the front support rod 5F, so as to function as a support for the front support rod to be connected to the right side surface.

As mentioned in Fig. 10, the bolt insert holes Rb are formed within the portion of the rear sub frame 25R, which is positioned more to the inside of the crane than the main frame portion 25A; this portion is connected to the side surface at the crane body inner side surface out of the side surfaces of the rear support rod 5R by means of bolts.

That is to say, in this embodiment, the rear sub frame portion 25R is connected to the right surface, which is different from the rear surface portion being connected and supported by the rear side wheel support frame 24, out of the side surfaces of the rear support rod 5R, so as to function as a support for the rear support rod.

As seen from Fig. 9, at the left end of the driving wheel support frame 23, the L-shaped connecting plate 23A, which is to be connected to the left side surface of the front support rod 5F, is connected by means of bolts.

As seen from Fig. 10, at the left end of the idling wheel support frame 24, the L-shaped connecting plate 24A, which is to be connected to the left side surface of the near support rod 5R, is connected by means of bolts.

Therefore, as shown in Fig. 11, the front support rod 5F, by being connected to the driving wheel support frame 23, the front sub frame 25F and the connecting plate 23A, by means of bolts under the condition that the lower end of the rod 5F is held and supported at the flange 23a of the driving wheel support frame 23 and on the mount 31F for front support rod, is thus supported by the lower frame 3.

Further, as shown in Fig. 11, the rear side support rod 5R is supported at the lower frame 3 by bolt connection with respect to the idling wheel support frame 24, the rear sub frame 25R and the connecting plate 24A under the condition that the lower end of the rod 5R is held and supported on the flange 24a of the idling wheel support frame 24 and on the mount 31R for the rear side support rod.

As shown in Figs. 6 and 8, an attachment frame 32 is welded to the upper end of the front sub frame 25F, to which a device G for driving the platform with a reel drum 16 and an electric motor 16A is attached. Upper and lower reinforcing members 32a is provided between the attachment frame 32 and the sub frame 25F.

The device G is attached to the attachment frame 32 by means of bolts at an upper portion of the front driving wheel support frame 23.

As seen from Figs. 6 to 8, a control box H is mounted above the device G for driving the platform and supported by a support frame 33. A controller for controlling the operation of the wheel driving motor 9A and/or the operation of the electric motor 16A for driving the reel drum 16 is stored in the control box H.

The support frame 33 for supporting the control box H has a lower frame portion 33a extended in a vertical direction and an upper frame portion 33b, which is extended backward from the upper end of the lower frame portion 33a, so that the control box H is, as shown in Fig. 7, mounted on the upper frame portion 33b and supported by the support frame 33 in such a manner that, as shown in Fig. 3, the upper end thereof is connected to the front support rod 5F.

Then, the lower end of the lower frame portion 33a is bolted to the upper end of the front driving wheel support frame 23, and, the upper and lower intermediate portion and the upper end of the lower frame portion 33a are bolted to the front side support rod 5F. Further more a right side peripheral portion of the lower frame portion 33a in the width direction of the body is bolted to the front sub frame 25F.

As shown in Figs. 13 to 15, the upper frame 6 of the stacker crane A comprises left and right frame portions 6L and 6R; and the left and right frame portions 6L and 6R are connected to the front and rear support rods 5F and 5R by means of bolts respectively, in a condition in which the front and rear support rods 5F and 5R are positioned between the left and right frame portions 6L and 6F.

The left and right frame portions 6L and 6R have the same structure, which consists of a main part 6a made of a first plate following in a vertical direction and an elongated reinforcing part 6b, which is welded to the main part 6a. The main part comprises a front and rear extension L extended in the front and rear direction of the crane, and mast connecting portions Fj and Rj which are extended downward from both ends in the front and rear direction of the front and rear extension L.

The left and right frame portions 6L and 6R are constructed such that they are connected to the front support rod 5F and the rear support rod 5R by means of bolts, respectively, in a condition in which the front and rear mast connecting portions Fj and Rj of the main part 6a are being urged against the outer side surface of the front support rod 5F and rear support rod 5R, respectively.

When connecting the mast connecting portions Fj, Rj on both ends of the main part 6a to the front support rod 5F and the rear support rod 5R, respectively, the above-explained connecting plate is inserted into the concave groove U of the front and rear support rods 5F and 5R, and the bolts are threaded to the connecting plate.

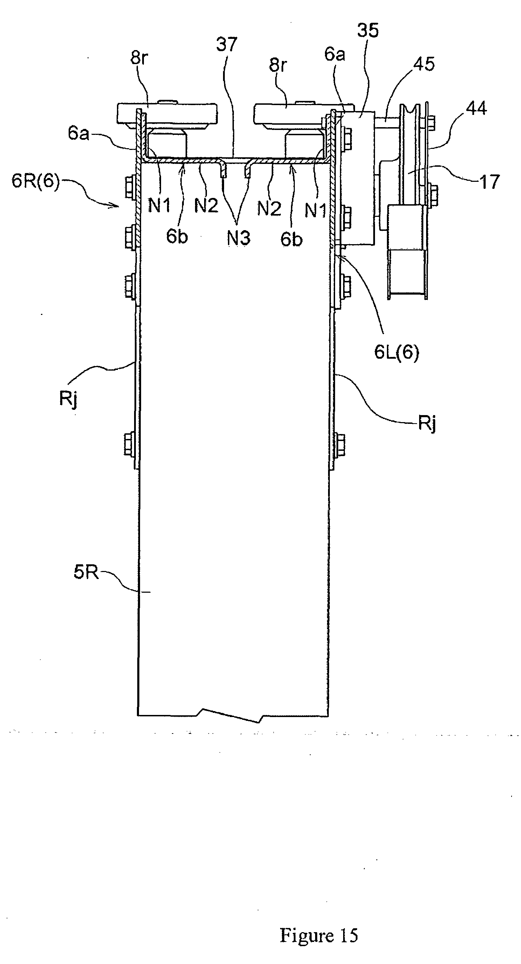

The reinforcing part 6b of the left or right frame portions 6L and 6R consists of a second plate following in a horizontal direction as shown in Fig. 15; it projects from the main part 6a in a width direction of the crane and elongated in the front and rear direction of the crane.

In other words, the reinforcing part 6b is bent in two stages with a longitudinal plate portion N1, which is welded to the inside of the main part 6a and following in a vertical direction viewed from the front and rear direction of the crane, a projected portion N2, which is extended inside from the lower end of the longitudinal plate portion N1 in a horizontal direction, and a downward bent portion N3 extended from the end portion of the projected plate portion N2 downwardly. The projected portion N2 corresponds to the plate following in a horizontal direction so as to project from the main part 6a in the width direction of the crane and be extended in the front and rear direction of the crane.

The pair of left and right frame portions 6L and 6R are provided with the reinforcing parts 6b, respectively. The reinforcing parts 6b project in the wide direction of the crane from the main part 6a so as to be extended toward the other side frame portion, and the projected portions N2 of the reinforcing parts 6b are urged against the upper end of the front and rear support rods 5F and 5R, respectively.

Further, as shown in Fig. 14, the reinforcing parts 6b have cutouts at inner side portions in the width direction and at both ends in the front and rear direction thereof. That is to say, both the ends of the downward bent portions N3 of the reinforcing parts 6b in the front and rear direction of the crane are located more inside than the end portions of the projected portions N2 of the reinforcing part 6b in the front and rear direction of the crane; and therefore, the edges K of the both ends of the downward bent portions N3 in the front and rear direction of the crane are urged to the outer circumference surface of the front and rear support rods 5F and 5R, so that the position of the pair of left and right frame portions 6L and 6R to the front and rear support rods 5F and 5R is restricted in the front and rear direction of the crane.

That is to say, when connecting the mast connecting portions Fj and Rj at the both end portions of the main part 6a to the front support rod 5F or the rear support rod 5R by means of bolts, theproj ected portion N2 of the reinforcing part 6b is urged against the upper end surfaces of the front support rod 5F or the rear support rod 5R, thereby the vertical position of the left and right frame portions 6L and 6R with respect to the front support rod 5F or the rear support rod 5R are restricted.

Further, when connecting the mast connecting portions Fj and Rj at the both end portions of the main part 6a to the front support rod 5F or the rear support rod 5R by means of bolts, the front and rear edge portions K of the downward bent portion N3 of the reinforcing part 6b are urged against the outer circumference surfaces of the front support rod 5F and the rear support rod 5R, thereby the position of the left and right frame portions 6L and 6R with respect to the front support rod 5F or the rear support rod 5R is restricted in the front and rear direction of the body.

In the present embodiment, the first support 34 for rotatably supporting the first guide 14 is connected to the front support rod 5F by bolts while being urged against the outer surface of the front side mast connecting portion Fj of the right side frame portion 6R of the upper frame 6. The first guide 14 guides the lifting wire 13A, which is connected to the body front side of the platform 4, out of the lifting wires 13A and 13B.

Further, the second support 35 for rotatably supporting the third guide 17 is connected by bolts to the rear support rod 5R while being urged against the outer surface of the rear side mast connecting portion Rj of the left side frame portion 6L of the upper frame 6. The third guide 17 guides the lifting wire 13B, which is connected to the body rear side of the platform 4, out of the lifting wires 13A and 13B.

Furthermore, the second guide 15 for guiding the lifting wire 13A , which has been guided downward by the first guide 14, and the fourth guide 18 for guiding the lifting wire 13B, which has been guided downward by the third guide 17 are commonly supported by the third support 36. The third support 36 is connected to the front surface of the front support rod 5F by means of bolts.

Moreover, the third support 36 is constituted to support the front side left and right guide rollers 8f, from amongst of the front and rear guide rollers 8f and 8r which are being urged against the guide rail 7 on the ceiling.

The fourth support 37, which is connected to the rear support rod 5R by means bolts, is constituted to support the rear side left and right guide rollers 8r, from amongst of the front and rear side guide rollers 8f and 8r which are being urged against the guide rail 7 on the ceiling.

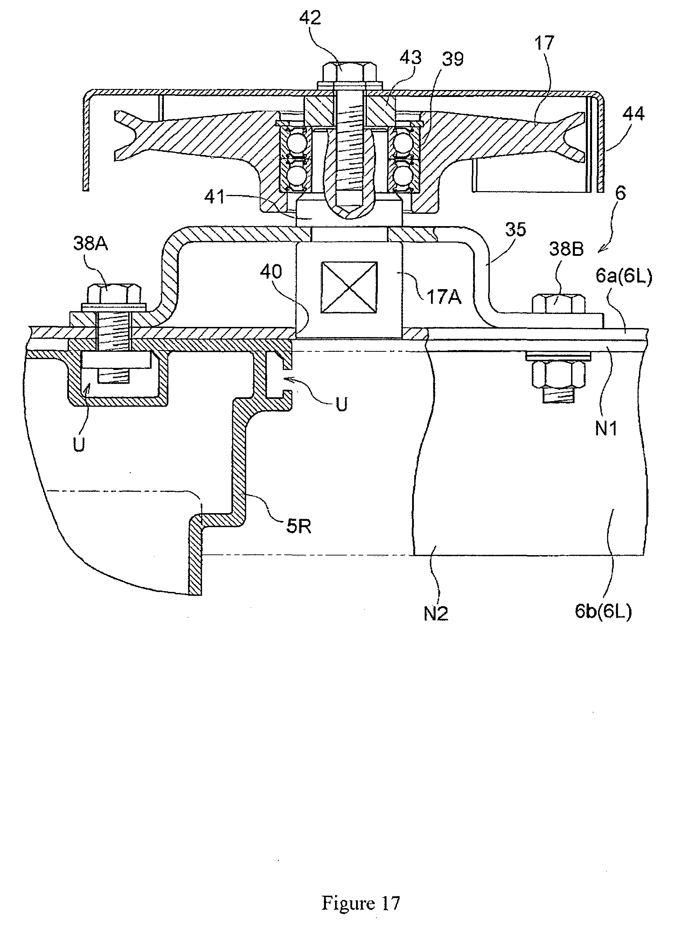

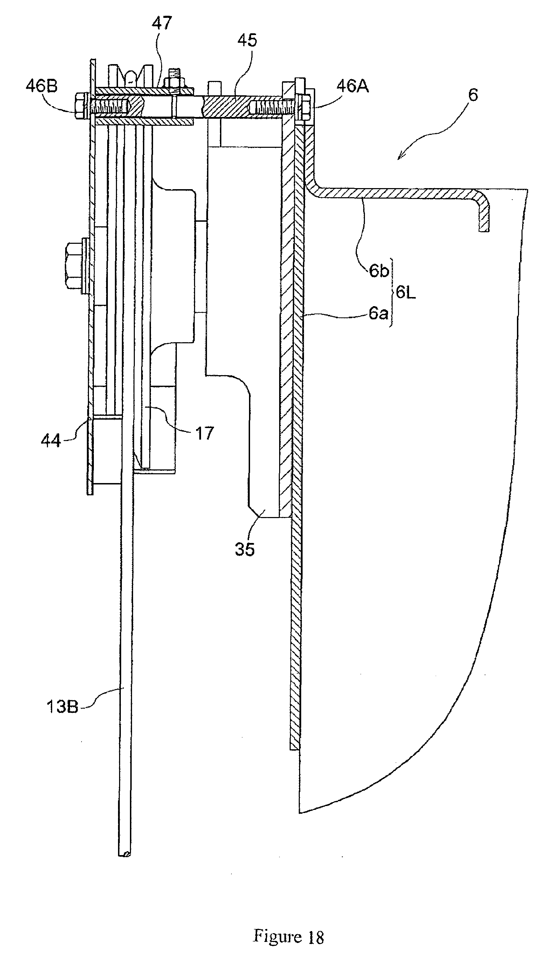

Additional explanation for the support structure of the third guide 17 will be made, referring to Figs. 17 and 18. The second support 35 comprises a main part having a reversed C-shape viewed from the top and plate portions extended from the ends of the main part in the front and rear directions of the crane, respectively.

The plate portion extended in the rear direction of the body from the main part of the second support 35 is connected to the rear support rod 5R by means of a bolt 38A, while holding the main part 6a of the left side frame portion 6L of the upper frame 6 between the rear support rod 5R and the plate portion; and the plate portion extended in the front direction of the body from the main part of the second support 35 is connected to the left side frame portion 6L of the upper frame 6 by means of a bolt 38B, which penetrates through the main part 6a of the left frame portion 6L of the upper frame 6 and the longitudinal plate portion N1 of the reinforcing part 6b.

The support rod 17A for supporting the third guide 17 is arranged such that it rotatably supports the third guide 17 via the bearing 39. The support rod 17A is provided in a condition in which the intermediate portion in a longitudinal direction of the rod 17A is inserted into the second support 35, and the base portion of the rod 17A is engaged into the engagement hole 40 being formed in the main part 6a of the left frame portion 6L of the upper frame 6.

The second support 35 and the bearing 39 are intermediated by a spacer 41 so that a bolt 42 threaded to the top portion of the support rod 17A urges the bearing 39 toward the second support 35 via a ring-shaped press member 43.

It should be noted that the first guide 14 is supported by the same structure as that of the third guide 17, then the explanation thereof is omitted here.

Further, a cover 44 for the side surface of the third guide 17 is tightened by a bolt 42, which is threaded to the top portion of the support rod 17A. The cover 44 is provided for all the first to fourth guides 14 to 18, respectively, as shown in Fig. 13 and 14.

As illustrated in Figs. 14, 15 and 18, the peripheral portions of the covers 44 for the first to fourth guides 14 to 18 are supported by supporting rods 45, respectively.

As a representative of the mounting portions of the supporting rods for these guides, the mounting portion of the supporting rod 45 for the third guide 17 will be explained, referring to Fig. 18. The inside portion of the supporting rod 45 in the width direction of the crane is supported by the second support 35 in a condition where the inside portion is connected to the second support 35 by means of a bolt 46A which penetrates through the second support 35, and to the outside portion of the supporting rod 45 in the width direction of the body is threaded a bolt 46B which penetrates through the cover 44, so that the peripheral portion of the cover 44 is supported by the support rod 45.

The supports rods 45 for supporting the peripheral portions of the covers 44 for the first to fourth guides 14 to 18 are used as supports for stoppers 47 (see Fig. 18) for preventing such a situation in which hoisting wires 13A and 13B come off from the first to fourth guides 14 to 18, respectively.

Referring to Fiugs. 18 to 20, explanation will be done for the support rod 45 of the cover 44 for the third guide 17, representing the support rods 45 for the first to fourth guides 14 to 18. The stopper 47 has a cylindrical shape and is slidably set on the support rod 45.

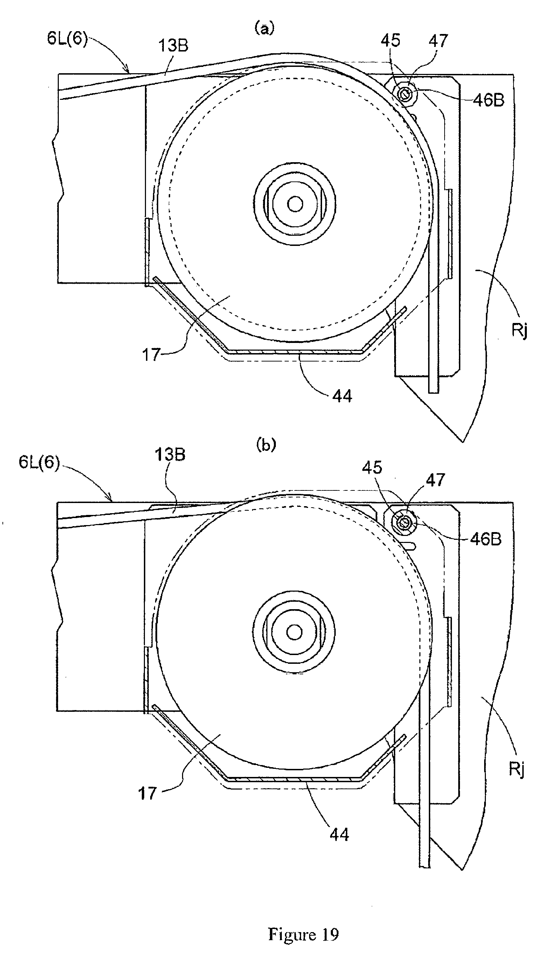

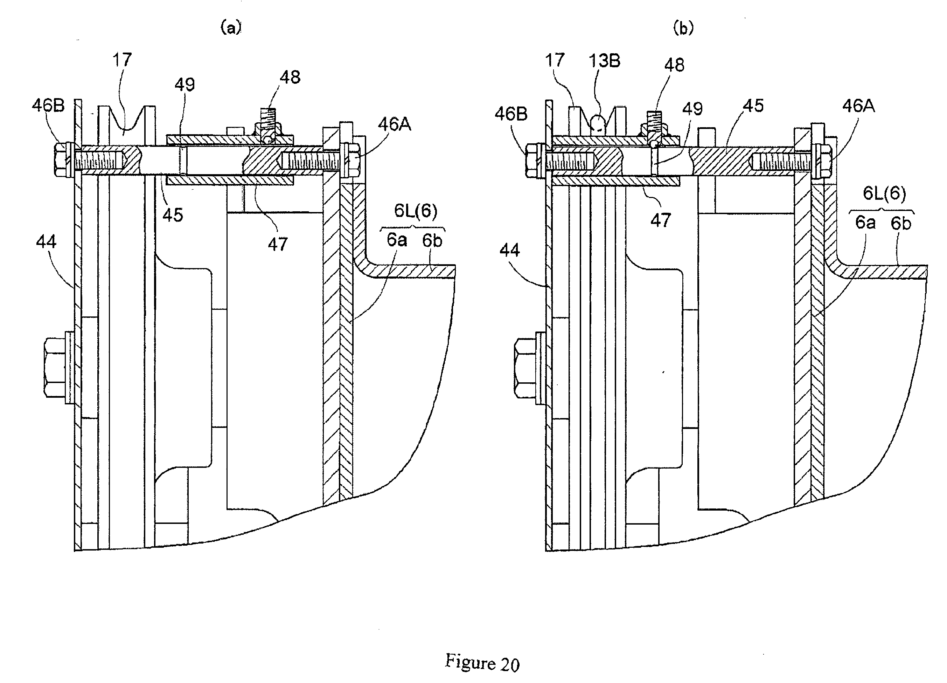

That is to say, the stopper 47 is slid along the support rod 45 in a longitudinal direction, so that the position thereof can be switched between the stopping position, at which it is positioned to be opposite to the third guide 17 in order to restrict the coming out of the wire 13B from the third guide 17 as shown in Figs. 18, 19(b) and 20(b), and the releasing position, at which it is positioned to be away from the third guide 17 in order to release the stop of the wire 13B as shown in Figs. 19(a) and 20(a).

Furthermore, the stopper 47 is provided with a positioning screw 48, which is threadably moved along the radius direction of the stopper, while the supporting rod 45 is provided with a ring-shaped groove 49 into which the top end of the screw 48 is engageable when the stopper 47is positioned at the stopping position.

Therefore, when attaching the wire 13B, a large space is formed between the third guide 17 and the supporting rod 45 therethrough by switching the stopper 47 to the releasing position for inserting the wire 13B. After attaching the wire 13B, the stopper 47 is switched to the stopping position and the positioning screw 48 is engaged into the ring-shaped groove 49, so that any separation of the wire 13B from the third guide 17 can be prevented.

The other embodiments will be listed below.
(1) In the above mentioned embodiments, the upper frame has a pair of left and right frame portions; however, the stacker crane can be embodied with the upper frame only having one frame portion.
   In the case of the stacker crane having a pair of left and right frame portions, the left and right frame portions are not connected to each other in the above-mentioned embodiments. However, an arrangement such that a plurality of connecting frames for connecting the left and right frame portions are provided in the body front and rear direction in a condition that both end portions of the connecting frames are connected to the left and right frame portions by means of bolts, respectively, so as to form a ladder-shaped upper frame is possible.
(2) In the embodiments mentioned above, the enforce part constituting the upper frame has a projected portion and a downward bent portion, however, the downward bent potion can be omitted.
   In such a case where no downward bent portion is provided, the upper end portion of the plate of the main part being extended in a vertical direction could be bent in the width direction of the body in order to use the bent portion as an enforcing part.
(3) In the embodiments mentioned above, the lower end surfaces of the front and rear support rods are mounted not only on the driving wheel support frame or the flange of the idling wheel support frame but also on the mount for the rods provided on the lower frame. However, the mount for the rods can be omitted.
(4) In the embodiments mentioned-above, a driving wheel and an idling wheel are provided as running wheels. However, it is possible to provide driving wheels on both the front and rear of the lower frame.
(5) In the embodiment mentioned-above, the connecting frame is arranged on the side surface of the front and rear wheel support frames. However, it may be possible to arrange connecting frames both left and right side surfaces of the front and rear wheel supporting frames, respectively, or the connecting frame could be arranged at left and right center positions of the front and rear wheel support frames.

### List of Numerical References

- 2: rail
- 3: lower frame
- 4: platform
- 5F, 5R: support rod
- 6: upper frame
- 6a: main part
- 6b: reinforcing part
- 6L, 6R: frame portion
- 9: running wheel (driving wheel)
- 11: running wheel (idling wheel)
- 23, 24: wheel support frame
- 23a: flange
- 24a: flange
- 25: connecting frame
- Fj, Rj: mast connecting portion
- K: edge portion
- L: front and rear extensions
- N2: projected portion
- N3: downward bent portion

## Claims

1. A stacker crane comprising a lower frame (3) having running wheels (9,11), which can freely run along rail(s) (2), at both front and rear end portions thereof, front and rear support rods (5F,5R) being stood from said front and rear end portions of the lower frame, respectively; an upper frame (6) for connecting upper end portions of said front and rear support rods (5F,5R), and a platform (4) being guided by said front and rear support rods so as to be freely lifted up and down;
wherein said upper frame (6) comprises a main part being formed by a first plate (6a) following a vertical direction which comprises a front and rear extension (L) being extended in a front and rear direction of said crane and a mast connecting portions (Fj,Rj) being extended downward from both ends of the front and rear extensions, respectively; and a reinforcing part being formed by a second plate (6b) following a horizontal direction which is projected in a width direction of said crane and extended in the front and rear direction of said crane;
wherein said front and rear mast connecting portions (Fj,Rj) of the main part (6a) are connected to said front and rear support rods (5F,5R) by means of bolts, respectively, while being urged against side surfaces of said front and rear support rods, respectively;
**characterised in that**:
said upper frame (6) comprises a pair of left and right frame portions (6L(6),6R(6)) being constituted by said main part (6a) and said reinforcing part (6b); and
said pair of left and right frame portions (6L(6),6R(6)) are connected to said front and rear support rods (5F,5R), respectively, in a condition in which the front and rear support rods (5F,5R) are positioned between said left and right frame portions (6L(6),6R(6)).

2. A stacker crane according to Claim 1, wherein said reinforcing parts (6b) of said pair of left and right frame portions (6L(6),6R(6)) comprise projected portions (N2) being projected in a width direction of the crane from the main part (6a) in a condition in which they are extended toward the frame portion on the other side, respectively, and in which they are urged against the top ends of said front and rear support rods (5F,5R), respectively.

3. A stacker crane according to Claim 2, wherein said reinforcing part (6b) further comprises a downward bent portion (N3) being extended downwardly from the end of said projected portion (N2) in the width direction of the crane;
wherein both end portions of said downward bent portion (N3) are positioned more inside than end portions of said projected portion (N2) in the front and rear direction of the crane; and
wherein both edge portions of said downward bent portions (N3) in the front and rear direction of the crane are urged against the outer circumference surfaces of said front and rear support rods (5F,5R), so that the position of the pair of left and right frame portions (6L(6),6R(6)) against the front and rear support rods in the front and rear direction is restricted.

4. A stacker crane according to any one of Claims 1 to 3, wherein said lower frame (3) is consisted of front and rear wheel support frames (23,24) for supporting said running wheels (9,11) and a connecting frame (25) for connecting the front and rear wheel support frames;
wherein a first mount portion (23A) for holding and mounting a lower end surface of the front support rod (5F) is formed on the lower end portion of said front wheel support frame (23), and a second mount portion (24A) for holding and mounting a lower end surface of the rear support rod (5R) is formed on the lower end portion of said rear wheel support frame (24);
wherein the lower end surface of said front support rod (5F) is held on said first mount portion (23A) of said front wheel support frame (23) and the side surface thereof is connected and supported to said front wheel support frame (23); and
wherein the lower end surface of said rear support rod (5R) is held on said second mount portion (24A) of said rear wheel support frame (24) and the side surface thereof is connected and supported to said rear wheel support frame (24).

5. A stacker crane according to any one of Claims 1 to 4, wherein guide rollers (8f,8r) being urged against the side surfaces of the guide rail (7) that are provided on a ceiling side are attached to said front and rear support rods (5F,5R), respectively.

## Patentansprüche

1. Regalbediengerät, aufweisend einen unteren Rahmen (3) mit Laufrädern (9, 11), die frei entlang (einer) Schiene(n) (2) laufen können, am vorderen und hinteren Endabschnitt davon, wobei eine vordere bzw. hintere Stützstange (5F, 5R) auf dem vorderen bzw. hinteren Endabschnitt des unteren Rahmens steht; einen oberen Rahmen (6) zum Verbinden der oberen Endabschnitte der vorderen und der hinteren Stützstange (5F, 5R); und eine Plattform (4), die von der vorderen und der hinteren Stützstange geführt wird, um frei nach oben und nach unten gehoben zu werden;
wobei der obere Rahmen (6) einen Hauptteil aufweist, der durch eine einer vertikalen Richtung folgende erste Platte (6a) gebildet ist, die eine vordere und eine hintere Erstreckung (2) aufweist, die sich in eine vordere und eine hintere Richtung des Bediengeräts erstreckt, und Mastverbindungsteile (Fj, Rj), die sich von beiden Enden der vorderen bzw. der hinteren Erstreckung nach unten erstrecken; und einen Verstärkungsteil, der durch eine einer horizontalen Richtung folgende zweite Platte (6b) gebildet ist, die in eine Breitenrichtung des Bediengeräts vorsteht und sich in die vordere und die hintere Richtung des Bediengeräts erstreckt;
wobei der vordere und der hintere Mastverbindungsteil (Fj, Rj) des Hauptteils (6a) jeweils mittels Bolzen mit der vorderen bzw. hinteren Stützstange (5F, 5R) verbunden sind, während sie jeweils gegen die Seitenflächen der vorderen bzw. hinteren Stützstange gedrängt werden;
dadurch aekennzeichnet, dass
der obere Rahmen (6) ein Paar aus einem linken und einem rechten Rahmenteil (6L(6), 6R(6)) aufweist, die aus dem Hauptteil (6a) und dem Verstärkungsteil (6b) bestehen; und
wobei das Paar aus dem linken und dem rechten Rahmenteil (6L(6), 6R(6)) jeweils mit der vorderen bzw. hinteren Stützstange (5F, 5R) in einem Zustand verbunden ist, in dem die vordere und die hintere Stützstange (5F, 5R) zwischen dem linken und dem rechten Rahmenteil (6L(6), 6R(6)) positioniert sind.

2. Regalbediengerät nach Anspruch 1, wobei die Verstärkungsteile (6b) des Paars aus linkem und rechtem Rahmenteil (6L(6), 6R(6)) vorstehende Abschnitte (N2) aufweisen, die in eine Breitenrichtung des Bediengeräts vom Hauptteil (6a) in einem Zustand vorstehen, in dem sie sich jeweils zum Rahmenteil an der anderen Seite erstrecken und in dem sie jeweils gegen die oberen Enden der vorderen und der hinteren Stützstange (5F, 5R) gedrängt werden.

3. Regalbediengerät nach Anspruch 2, wobei der Verstärkungsteil (6b) des Weiteren einen nach unten gebeugten Abschnitt (N3) aufweist, der sich vom Ende des in die Breitenrichtung des Bediengeräts vorstehenden Abschnitts (N2) nach unten erstreckt;
wobei beide Endabschnitte des nach unten gebeugten Abschnitts (N3) in der vorderen und der hinteren Richtung des Bediengeräts weiter innen positioniert sind als Endabschnitte des vorstehenden Abschnitts (N2); und
wobei beide Kantenabschnitte der nach unten gebeugten Abschnitte (N3) in der vorderen und der hinteren Richtung des Bediengeräts gegen die äußeren Umfangsflächen der vorderen und der hinteren Stützstange (5F, 5R) gedrängt werden, sodass die Position des Paars aus dem linken und dem rechten Rahmenteil (6L(6), 6R(6)) gegen die vordere und die hintere Stützstange in der vorderen und der hinteren Richtung beschränkt ist.

4. Regalbediengerät nach einem der Ansprüche 1 bis 3, wobei der untere Rahmen (3) aus einem vorderen und einem hinteren Radstützrahmen (23, 24) zum Stützen der Laufräder (9, 11) und einem Verbindungsrahmen (25) zum Verbinden des vorderen und des hinteren Radstützrahmens besteht;
wobei ein erster Befestigungsteil (23A) zum Halten und Befestigen einer unteren Endfläche der vorderen Stützstange (5F) am unteren Endabschnitt des vorderen Radstützrahmens (23) gebildet ist und ein zweiter Befestigungsteil (24A) zum Halten und Befestigen einer unteren Endfläche der hinteren Stützstange (5R) am unteren Endabschnitt des hinteren Radstützrahmens (24) gebildet ist;
wobei die untere Endfläche der vorderen Stützstange (5F) auf dem ersten Befestigungsteil (23A) des vorderen Radstützrahmens (23) gehalten wird und die Seitenfläche davon mit dem vorderen Radstützrahmen (23) verbunden und darauf gestützt ist; und
wobei die untere Endfläche der hinteren Stützstange (5R) auf dem zweiten Befestigungsteil (24A) des hinteren Radstützrahmens (24) gehalten wird und die Seitenfläche davon mit dem hinteren Radstützrahmen (24) verbunden und darauf gestützt ist.

5. Regalbediengerät nach einem der Ansprüche 1 bis 4, wobei Führungsrollen (8f, 8r), die gegen die an einer Deckenseite vorgesehenen Seitenflächen der Führungsschiene (7) gedrängt werden, jeweils an der vorderen und der hinteren Stützstange (5F, 5R) befestigt sind.

## Revendications

1. Grue empileuse comprenant un châssis inférieur (3) comportant des roues mobiles (9, 11) pouvant se déplacer librement le long d'un ou plusieurs rails (2), à des parties d'extrémité avant et arrière de celle-ci, des tiges de support avant et arrière (5F, 5R) s'élevant respectivement desdites portions d'extrémité avant et arrière du châssis inférieur ; un châssis supérieur (6) pour relier des portions d'extrémité supérieures desdites tiges de support avant et arrière (5F, 5R), et une plate-forme (4) guidée par lesdites tiges de support avant et arrière afin d'être librement levée et abaissée ;
dans laquelle ledit châssis supérieur (6) comprend une partie principale constituée d'une première plaque (6a) suivant une direction verticale qui comprend une extension avant et arrière (L) s'étendant dans une direction avant et arrière de ladite grue et des portions de liaison de mât (Fj, Rj) s'étendant vers le bas à partir respectivement des deux extrémités des extensions avant et arrière ; et une partie de renforcement constituée d'une deuxième plaque (6b) suivant une direction horizontale se projetant dans une direction de largeur de ladite grue et s'étendant dans la direction avant et arrière de ladite grue ;
dans laquelle lesdites portions de liaison de mât avant et arrière (Fj, Rj) de la partie principale (6a) sont reliées respectivement aux dites tiges de support avant et arrière (5F, 5R) au moyen de boulons, tout en étant pressées respectivement contre des surfaces latérales desdites tiges de support avant et arrière ;
**caractérisée en ce que** :
ledit châssis supérieur (6) comprend une paire de portions de châssis de gauche et droite (6L(6), 6R(6)) constituées de ladite partie principale (6a) et de ladite partie de renforcement (6b) ; et
ladite paire de portions de châssis gauche et droite (6L(6), 6R(6)) sont reliées respectivement aux dites tiges de support avant et arrière (5F, 5R) dans un état dans lequel les tiges de support avant et arrière (5F, 5R) sont positionnées entre lesdites portions de châssis gauche et droite (6L(6), 6R(6)).

2. Grue empileuse selon la revendication 1, dans laquelle lesdites parties de renforcement (6b) de ladite paire de portions de châssis gauche et droite (6L(6), 6R(6)) comprennent respectivement des portions en saillies (N2) se projetant dans une direction de largeur de la grue à partir de la partie principale (6a) dans un état dans lequel elles s'étendent vers la portion de châssis de l'autre côté et dans lequel elles sont pressées respectivement contre les extrémités supérieures desdites tiges de support avant et arrière (5F, 5R).

3. Grue empileuse selon la revendication 2, dans laquelle ladite partie de renforcement (6b) comprend en outre une portion pliée vers le bas (N3) s'étendant vers le bas à partir de l'extrémité de ladite portion en saillie (N2) dans la direction de largeur de la grue ;
dans laquelle les deux portions d'extrémité de ladite portion pliée vers le bas (N3) sont positionnées plus à l'intérieur que les portions d'extrémité de ladite portion en saillie (N2) dans la direction avant et arrière de la grue ; et
dans laquelle les deux portions de bord desdites portions pliées vers le bas (N3) dans la direction avant et arrière de la grue sont pressés contre les surfaces de circonférence extérieure desdites tiges de support avant et arrière (5F, 5R), de sorte que la position de la paire de portions de châssis gauche et droite (6L(6), 6R(6)) contre les tiges de support avant et arrière dans la direction avant et arrière soit restreinte.

4. Grue empileuse selon l'une quelconque des revendications 1 à 3, dans laquelle ledit châssis inférieur (3) se compose de châssis de support de roues avant et arrière (23, 24) pour supporter lesdites roues mobiles (9, 11) et d'un châssis de liaison (25) pour relier les châssis de support de roues avant et arrière ;
dans laquelle une première portion de montage (23A) pour maintenir et monter une surface d'extrémité inférieure de la tige de support avant (5F) est formée sur la portion d'extrémité inférieure dudit châssis de support de roues avant (23), et une deuxième portion de montage (24A) pour maintenir et monter une surface d'extrémité inférieure de la tige de support arrière (5R) est formée sur la portion d'extrémité inférieure dudit châssis de support de roues arrière (24) ;
dans laquelle la surface d'extrémité inférieure de ladite tige de support avant (5F) est maintenue sur ladite première portion de montage (23A) dudit châssis de support de roue avant (23) et la surface latérale de celle-ci est reliée au dit châssis de support de roues avant (23) et est supportée par celui-ci ; et
dans laquelle la surface d'extrémité inférieure de ladite tige de support arrière (5R) est maintenue sur ladite deuxième portion de montage (24A) dudit châssis de support de roue arrière (24) et la surface latérale de celle-ci est reliée au dit châssis de support de roues arrière (24) et est supportée par celui-ci.

5. Grue empileuse selon l'une quelconque des revendications 1 à 4, dans laquelle des rouleaux de guidage (8f, 8r) pressés contre les surfaces latérales du rail de guidage (7) fournies sur un côté de plafond sont attachés respectivement aux dites tiges de support avant et arrière (5F, 5R).
